# EUROPÄISCHE PATENTSCHRIFT

(11) **EP 0 663 561 B1**
(45) Veröffentlichungstag und Bekanntmachung des Hinweises auf die Patenterteilung: **22.07.1998**
(21) Anmeldenummer: 94810721.4
(22) Anmeldetag: 13.12.1994
(51) Int. Cl.: F22B 35/00

(54) **Dampferzeuger**
Steam generator
Générateur de vapeur

(30) Priorität: 14.01.1994 CH 120/94
(43) Veröffentlichungstag der Anmeldung: 19.07.1995
(73) Patentinhaber: ASEA BROWN BOVERI AG, 5400 Baden (CH)
(72) Erfinder: Ziegler, Georg, CH-8404 Winterthur (CH)

(56) Entgegenhaltungen:
- EP-A- 0 339 185
- US-A- 3 120 839
- PATENT ABSTRACTS OF JAPAN vol. 13, no. 434 (M-875) 28. September 1989 & JP-A-01 167 501 (BABCOCK) 3. Juli 1989
- BWK BRENNSTOFF WARME KRAFT, Bd.38, Nr.3, März 1986, DUSSELDORF DE Seiten 81 - 84 U. SCHATZ 'EMPFEHLUNGEN ZUM BAU OPTIMALER ECKROHR-MÜLLKESSEL'

## Beschreibung

### Technisches Gebiet

Die Erfindung betrifft einen Dampferzeuger mit einem dem Feuerraum nachgeschalteten konvektivem Teil, im wesentlichen bestehend aus rauchgasseitig hintereinandergeschalteten Endüberhitzer, Vorüberhitzer, Verdampfer und Economiser, wobei stromaufwärts des Endüberhitzers ein weiterer Berührungswärmeaustauscher mit mehreren Rohrregistern angeordnet ist.

### Stand der Technik

Derartige Dampferzeuger sind bekannt, beispielsweise aus dem Artikel Empfehlungen zum Bau optimaler Eckrohr-Müllkessel, veröffentlicht in der Zeitschrift "Brennstoff, Wärme, Kraft" Band 38 (März 1986). Um die Verschmutzung aufgrund hoher Rohrwandtemperaturen in Grenzen zu halten, und um bei hohen Heissdampftemperaturen das Korrosionsproblem gering zu halten, soll die Rauchgastemperatur vor dem Überhitzer ca. 650°C nicht wesentlich überschreiten. Deshalb ist als erste Berührungsfläche hinter dem Strahlenzugaustritt als Berührungswärmeaustauscher ein Verdampfer vorgesehen. Dabei sollte der vor dem Überhitzer angeordnete Verdampfer eine aufgelockerte Querteilung aufweisen und so viele Rohrreihen enthalten, dass die Rauchgastemperatur die genannten ca. 650°C vor dem Überhitzer nicht übersteigt.

Der kritische Teil bei der Auslegung des konvektiven Teils eines Dampfkessels beispielsweise für Müllverbrennung besteht in der richtigen Dimensionierung dieser vom Rauchgas zuerst beaufschlagten Heizflächen, des Berührungswärmeaustauschers also. Dieses sogenannte "Schutzbündel" ist in der Regel für den verschmutzten Betrieb mit hohen Rauchgastemperaturen so ausgelegt, dass die bereits genannten, dem Betreiber der Anlage garantierten 650°C vor dem Überhitzer nicht überschritten werden. Der Überhitzer seinerseits ist in der Regel für sauberen Betrieb bei garantierter Minimallast, d.h. einer vorbestimmten Teillast ausgelegt. Dies ist ein Betriebspunkt, bei dem infolge des Temperaturgefälles im Strahlungsraum relativ kalte Rauchgastemperaturen am Strahlenzugsaustritt vorherrschen. Da dem Überhitzer indes die relativ gross bemessenen Heizflächen des Berührungswärmeaustauschers noch vorgeschaltet sind, werden dort die bereits relativen kühlen Gase noch zusätzlich abgekühlt. Deshalb muss der Überhitzer gross und aufwendig gebaut sein, um die garantierte Überhitzertemperatur überhaupt zu erreichen. Im verschmutzten Betrieb hingegen, d.h. bei wesentlich heisseren Rauchgasen am Strahlenzugaustritt, nimmt der entsprechend gross dimensionierte Überhitzer zuviel Wärme auf. Abhilfe wird hier geschaffen, indem beim in der Regel zweiteiligen Überhitzer zischen dem Vorüberhitzer und dem Endüberhitzer eine grosse Menge Wasser eingespritzt werden muss. Dies kann dazu führen, dass unter Umständen eine zweite kostspielige Einspritzung vorgesehen werden muss. Oder aber die sogenannte Reisezeit, d.h. der Intervall zwischen zwei Kesselrevionen muss zwecks Säuberung der Austauschrohre reduziert werden.

### Darstellung der Erfindung

Der Erfindung liegt die deshalb die Aufgabe zugrunde, bei einem Dampferzeuger der eingangs genannten Art die oben genannten Nachteile zu vermeiden und eine Möglichkeit zu schaffen, bei welcher bei gleichbleibender Reisezeit auf eine zusätzliche Wassereinspritzung verzichtet werden kann.

Erfindungsgemäss wird dies dadurch erreicht, dass der Berührungswärmeaustauscher mit der Dampftrommel so verbunden ist, dass er sowohl als Verdampfer als auch als Überhitzer betreibbar ist, wobei die in der Regel vertikal oder geneigt angeordneten Rohrregister des Berührungswärmeaustauschers in der Verdampferschaltung vom aufzuheizenden Arbeitsmittel parallel von unten nach oben durchströmt sind und in der Überhitzerschaltung in Serie durchströmt sind.

Der Vorteil der neuen Massnahme ist in ihrer besonderen Einfachheit zu sehen, die auch ein problemloses Nachrüsten bestehender Anlagen erlaubt. Desweiteren ist es möglich, über weite Bereiche auch bei saubererm Betrieb Teillast zu fahren.

Zum Umschalten von Verdampfer- auf Überhitzerbetrieb und umgekehrt ist es zweckmässig, wenn der bei seriellem Betrieb eintrittsseitige und der austrittsseitige Kollektor der Rohrregister sowohl über ein absperrbares Überströmrohr mit der Dampftrommel als auch über eine Dampfsperre mit der von der Dampftrommel zum Vorüberhitzer führenden Dampfleitung verbunden sind. Besonders einfach ist es, wenn als Dampfsperre jeweils ein mit Entleerungsventilen versehenes Syphon zur Anwendung gelangt.

Während des Überhitzerbetriebes ist ein Absperrorgan in der von der Dampftrommel zum Vorüberhitzer führenden Dampfleitung geschlossen, wobei dieses Absperrorgan zwischen den zu den Dampfsperren abzweigenden Leitungen angeordnet ist. Diese Dampfsperren mit den entsprechenden Leitungen zur Dampfleitung sowie das zwischen diesen Leitungen angeordnete Absperrorgan in der Dampfleitung sind im Prinzip die einzigen Elemente, die einer bestehenden, für Verdampferbetrieb vorgesehenen Anlage hinsichtlich eines zusätzlichen Überhitzerbetriebes zugefügt werden müssen.

Während des Verdampferbetriebes sind die unteren Kollektoren der vertikal angeordneten Rohrregister über eine absperrbare Leitung mit dem Fallrohr der Dampftrommel verbunden, um den Naturumlauf zu gewährleisten.

### Kurze Beschreibung der Zeichnung

In der Zeichnung ist ein Ausführungsbeispiel der Erfindung vereinfacht dargestellt.
Es zeigen:
- Fig.1: das Prinzipschema des konvektiven Teils eines Dampferzeugers;
- Fig.2: den Berührungswärmeaustauscher in Verdampferschaltung;
- Fig.3: den Berührungswärmeaustauscher in Überhitzerschaltung.

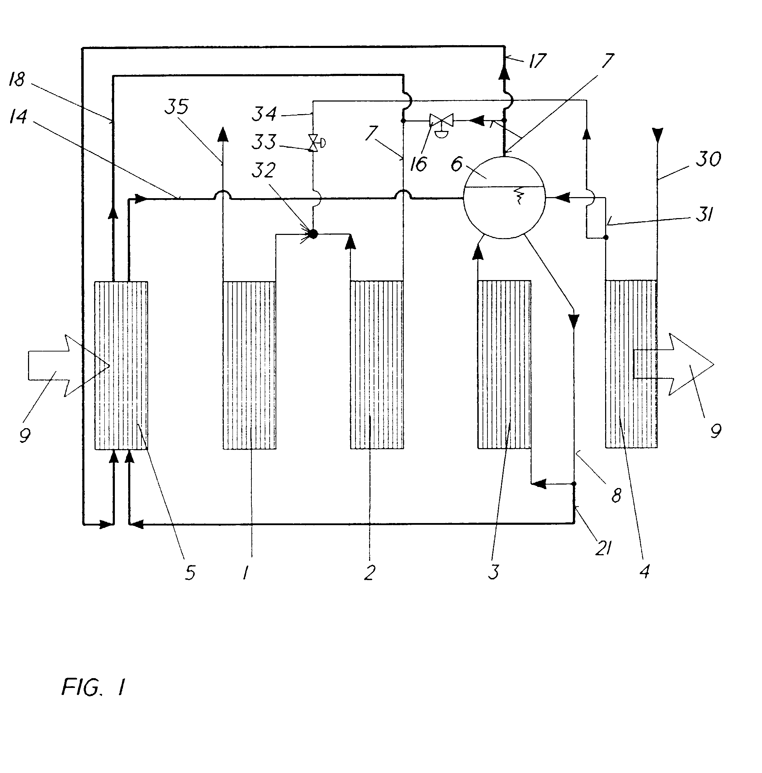

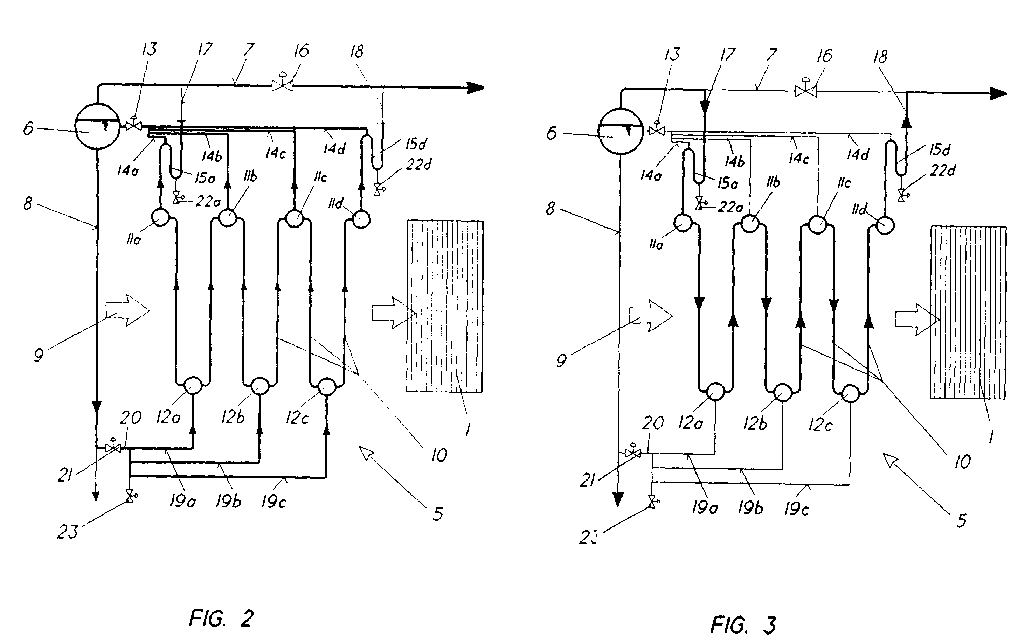

Es sind nur die für das Verständnis der Erfindung wesentlichen Elemente gezeigt. Nicht dargestellt ist in Fig. 1 beispielsweise der vorgeschaltete Strahlungsraum und in den Fig. 2 und 3 die Rohrverbindungen zum Vorüberhitzer und zum Verdampfer sowie die Zu- und Ableitungen des Endüberhitzers. Die Strömungsrichtungen der Arbeitsmittel sind mit Pfeilen bezeichnet.

### Weg zur Ausführung der Erfindung

Das Schaltschema in Fig. 1 zeigt den horizontal angeordneten Berührungszug eines für die Müllverbrennung geeigneten Dampfkessels. Die von den Rauchgasen in Pfeilrichtung 9 beaufschlagten Apparate sind in der Reihenfolge ihrer Durchströmung zunächst ein Berührungswärmeaustauscher 5, ein Endüberhitzer 1, ein Vorüberhitzer 2, ein Verdampfer 3 und schliesslich ein Economiser 4.

Das aufzuheizende Arbeitsmittel, hier Kesselwasser, gelangt über eine Eintrittsleitung 30 in den Economiser 4. Dessen Austrittsleitung 31 mündet in die Dampftrommel 6. Aus dessen Fallrohr 8 wird des Wasser im Naturumlauf in einen Verdampfer 3 eingeleitet, aus welchem es zurück in den Wasserteil der Dampftrommel geführt wird. Aus dem Dampfteil der Trommel gelangt das Arbeitsmittel über die Dampfleitung 7 in den Vorüberhitzer 2 des zweiteiligen Überhitzers. In der Verbindungsleitung des Vorüberhitzers 2 zum Endüberhitzer 3 ist eine Wassereinspritzung 32 angeordnet. Das dort in die Dampfleitung 7 einzuspritzende Wasser wird über eine mit einem Absperrorgan 33 ausgerüstete Einspritzleitung 34 bezogen, die von der Austrittsleitung 31 des Economisers 4 abzweigt. Aus dem Endüberhitzer 3 wird der überhitzte Dampf dem Verbraucher, in der Regel eine Dampfturbine, über eine Frischdampfleitung 35 zugeführt.

Vom Fallrohr 8 der Dampftrommel 6 zweigt eine Leitung 21 ab, die in den Berührungswärmeaustauscher 5 mündet. Dessen Ausgang ist über ein Überströmrohr 14 wiederum wasserseitig mit der Dampftrommel 8 verbunden. Soweit sind Anlagen, bei denen der Berührungswärmeaustauscher 5 nur als Verdampfer arbeiten kann, bekannt.

Die neue Massnahme besteht nunmehr darin, den Berührungswärmeaustauscher 5 auch im Überhitzerbetrieb anzuwenden. Hierzu zweigen von der Dampfleitung 7 zwei weitere Leitungen ab. Eine erste Leitung 17 führt zum Berührungswärmeaustauscher 5, eine zweite Leitung 18 führt von diesem Apparat zurück zum Eintritt des Vorüberhitzers 2. Um diese Schlaufe durchströmen zu können, ist in der Dampfleitung 7 zwischen den beiden Abzweigungen ein Absperrorgan 16 vorgesehen.

Wie die neue Massnahme im einzelnen aussieht, ist in den Fig. 2 und 3 erläutert, welche im wesentlichen nur den Berührungswärmeaustauscher 5 mitsamt Zu- und Abführleitungen darstellen. Diese beiden Figuren unterscheiden sich lediglich in der Strichdicke einzelner Elemente und in der Pfeilrichtung des aufzuheizenden Mediums. Die dick ausgezogenen Leitungen bezeichnen die jeweils in Betrieb stehenden Leitungen. Hierbei zeigt Fig. 2 den Verdampferbetrieb und Fig. 3 den Überhitzerbetrieb.

Der Berührungswärmeaustauscher besteht im wesentlichen aus einer Mehrzahl von hintereinandergeschalteten Rohrregistern 10, von denen hier lediglich 3 eingezeichnet sind. Die nicht näher bezeichneten, in der Vertikalen verlaufenden Rohre der einzelnen Register sind an ihren oberen Enden in Kollektoren 11a, 11b, 11c und 11d eingeschweisst. An ihren unteren Enden sind sie in Kollektoren 12a, 12b und 12c eingeschweisst.

Die unteren Kollektoren sind über Zuführleitungen 19a, 19b und 19c mit einer gemeinsamen Leitung 20 verbunden, die ihrerseits vom Fallrohr 8 abzweigt. In der Leitung 20 sind ein Absperrorgan 21 sowie ein Entleerungventil 23 angeordnet.

Die oberen Kollektoren sind jeweils über Überströmrohre 14a, 14b, 14c und 14d mit einer gemeinsamen Leitung verbunden, die in den Wasserteil der Dampftrommel 6 mündet. In dieser Leitung ist ein Absperrorgan 13 angeordnet. Sämtliche Überströmrohre verlaufen unterhalb des Wasserniveaus der Dampftrommel 6.

In den Verbindungsleitungen des eintrittsseitigen Kollektors lla und des austrittsseitigen Kollektors 11d zu ihren jeweiligen Überströmrohren 14a und 14d zweigen Dampfsperren 15a und 15d ab. Es sind einfache Syphons, deren oberer Bogen in die entsprechende Verbindungsleitung mündet. An ihren unteren Bögen ist jeweils eine Entwässerungsmöglichkeit in Form von Entleerungsventilen 22a resp. 22d vorgesehen. Das andere Ende der Syphons 15a und 15d ist über Leitungen 17 resp. 18 mit der Dampfleitung 7 in leitender Verbindung. Diese Leitungen 17 resp. 18 sind die obenerwähnten Abzweigungen, zwischen denen sich in der Dampfleitung das Absperrorgan 16 befindet.

Die Wirkungsweise der Anlage ist folgende:
In der Verdampferschaltung des Berührungswärmeaustauschers 5 gemäss Fig. 2 gelangt das zu verdampfende Wasser aus dem Fallrohr 8 bei offenem Absperrorgan 21 über die Zuführleitungen 19a, 19b und 19c in die unteren Kollektoren 12a, 12b und 12c der Rohrregister 10. Sämtliche Rohre der mehreren Register werden in aufsteigender Richtung durchströmt. Hierbei wird Wärme aus den die Rohre umströmenden Rauchgasen 9 aufgenommen. Das Arbeitsmittel gelangt in die oberen Kollektoren 11a bis 11d, und von dort in die Überströmrohre 14a bis 14d. Das Wasser-Dampfgemisch wird über das offene Absperrorgan 13 in den Wasserteil der Trommmel eingeleitet. Der in der Trommel vorliegende Dampf gelangt bei offenem Absperrorgan 16 über die Dampfleitung 7 zum Vorüberhitzer. In den mit der Dampfleitung 7 über die Leitungen 17 und 18 verbundenen Schenkeln der Syphons wird sich der Wasserstand etwa auf das Wasserniveau der Dampftrommel 6 einstellen, wie dies in Fig. 2 angedeutet ist. Diese Verdampferschaltung wird der Betreiber bei einer verschmutzten Anlage wählen, d.h. bei relativ heissen Rauchgasen, wobei vor dem Endüberhitzer eine grosse Wärmemenge an den entsprechend dimensionierten Apparat 5 abzuführen ist.

Die Überhitzerschaltung des Berührungswärmeaustauschers 5 gemäss Fig. 3 wird vom Betreiber am Anfang der Reisezeit gewählt, d.h. bei sauberer Anlage und deshalb weniger heissen Rauchgasen. Hierzu muss der Austauscher 5 geleert werden. Bei geschlossenen Absperrorganen 20 und 13 und offenen Entleerungsventilen 23, 22a und 22d wird das Wasser abgelassen. Das Absperrorgan 16 in der Dampfleitung 7 wird geschlossen. Anlässlich des Betriebes strömt nunmehr der aus der Dampftrommel kommende Dampf über die Leitung 17 und die Dampfsperre 15a in den Eintrittskollektor 11a des vom Dampf und von den Rauchgasen zuerst beaufschlagten Rohrregisters 10. Wie in Fig. 3 dargestellt, durchströmt der Dampf die einzelnen Rohrregister nunmehr in Serie. Der Apparat 5 wirkt nunmehr als Vorüberhitzer. Aus dem Austrittskollektor 11d gelangt der teilüberhitzte Dampf über die Dampfsperre 15d und die Leitung 18 zurück in die Dampfleitung 7 und von dort aus in den eigentlichen Vorüberhitzer.

Die in Fig. 3 dargestellte Betriebsweise kann auch gewählt werden bei einer mit Teillast betriebenen verschmutzten Anlage. Dies ist ein weiterer Vorteil gegenüber den bekannten Anlagen.

Selbstverständlich ist die Erfindung nicht auf das gezeigte und beschriebene Ausführungsbeispiel beschränkt. In Abweichung zur in Fig. 3 dargestellten Gleichstromschaltung der Rohrregister könnten der Apparat genau so gut im Gegenstrom beaufschlagt werden. Dabei würde der aus der Dampftrommel 6 kommende Dampf über die Leitung 18 und die Dampfsperre 15d zunächst in den Kollektor 11d eingeführt werden und nach Durchströmen der Rohrregister aus dem Kollektor 11a abgezogen werden.

Desweiteren wäre es denkbar, anlässlich des Kesselbetriebes eine fliegende Umschaltung von Verdampfer- auf Überhitzerbetrieb und umgekehrt vorzusehen.

### Bezugszeichenliste

- 1: Endüberhitzer
- 2: Vorüberhitzer
- 3: Verdampfer
- 4: Economiser
- 5: Berührungswärmeaustauscher
- 6: Dampftrommel
- 7: Dampfleitung
- 8: Fallrohr
- 9: Rauchgasströmung
- 10: Rohrregister
- 11a-d: obere Kollektoren
- 12a-c: untere Kollektoren
- 13: Absperrorgan
- 14a-d: Überströmrohr
- 15a,d: Dampfsperre
- 16: Absperrorgan
- 17: Leitung zu 15a
- 18: Leitung zu 15b
- 19a-c: Zuführleitung
- 20: Absperrorgan Leitung
- 21: Leitung
- 22a,d: Entleerungventil
- 23: Entleerungventil
- 30: Eintrittsleitung
- 31: Austrittsleitung
- 32: Wassereinspritzung
- 33: Absperrorgan
- 34: Einspritzleitung
- 35: Frischdampfleitung

## Patentansprüche

1. Dampferzeuger mit einem dem Feuerraum nachgeschalteten konvektivem Teil, im wesentlichen bestehend aus rauchgasseitig hintereinandergeschalteten Endüberhitzer (1), Vorüberhitzer (2), Verdampfer (3) und Economiser (4), wobei rauchgasseitig vor dem Endüberhitzer (1) ein weiterer Berührungswärmeaustauscher (5) mit mehreren Rohrregistern (10) angeordnet ist,
dadurch gekennzeichnet,
dass der Berührungswärmeaustauscher (5) mit der Dampftrommel (6) so verbunden ist, dass er sowohl als Verdampfer als auch als Überhitzer betreibbar ist, wobei die in der Regel vertikal oder geneigt angeordneten Rohrregister (10) des Berührungswärmeaustauschers in der Verdampferschaltung vom aufzuheizenden Arbeitsmittel parallel von unten nach oben durchströmt sind und in der Überhitzerschaltung in Serie durchströmt sind.

2. Dampferzeuger nach Anspruch 1, dadurch gekennzeichnet, dass bei serieller Durchströmung der eintrittsseitige und der austrittsseitige Kollektor (11a,11d) der Rohrregister (10) sowohl über jeweils ein absperrbares (13) Überströmrohr (14a,14d) mit der Dampftrommel (6) als auch über jeweils eine Dampfsperre (15a,15d) mit der von der Dampftrommel zum Vorüberhitzer (2) führenden Dampfleitung (7) verbunden sind.

3. Dampferzeuger nach Anspruch 2, dadurch gekennzeichnet, dass die Dampfsperre (15a,15d) ein Syphon ist.

4. Dampferzeuger nach Anspruch 2, dadurch gekennzeichnet, dass in der von der Dampftrommel (6) zum Vorüberhitzer (7) führenden Dampfleitung (7) ein Absperrorgan (16) zwischen den jeweils zu den Dampfsperren (15a,15d) abzweigenden Leitungen (17,18) angeordnet ist.

5. Dampferzeuger nach Anspruch 1, dadurch gekennzeichnet, dass die unteren Kollektoren (12a,12b,12c) der vertikal angeordneten Rohrregister über Zuführleitungen (19a,19b,19c) und eine absperrbare (20) Leitung (21) mit dem Fallrohr (8) der Dampftrommel (6) verbunden sind.

6. Dampferzeuger nach Anspruch 2 und 5, dadurch gekennzeichnet, dass die Dampfsperren (15a,15d) und die Zuführleitungen (19a,19b,19c) mit Entleerungventilen (22a,22d,23) versehen sind.

## Claims

1. Steam generator having a convective part arranged downstream of the furnace chamber and essentially consisting of final superheater (1), pre-superheater (2), evaporator (3) and economizer (4) connected in series on the flue-gas side, a further contact heat exchanger (5) having a plurality of tube banks (10) being arranged on the flue-gas side upstream of the final superheater (1), characterized in that the contact heat exchanger (5) is connected to the steam drum (6) in such a way that it can be operated as both an evaporator and a superheater, the working medium to be heated flowing in parallel from the bottom to the top through the tube banks (10), as a rule arranged vertically or inclined, of the contact heat exchanger in the evaporator circuit and flowing in series through said tube banks (10) of the heat exchanger in the superheater circuit.

2. Steam generator according to Claim 1, characterized in that, during series flow, the inlet-side and outlet-side collectors (11a, 11d) of the tube banks (10) are connected to the steam drum (6) via a respective overflow pipe (14a, 14d) which can be shut off (13) as well as via a respective steam barrier (15a, 15d) to the steam line (7) leading from the steam drum to the pre-superheater (2).

3. Steam generator according to Claim 2, characterized in that the steam barrier (15a, 15d) is a siphon.

4. Steam generator according to Claim 2, characterized in that, in the steam line (7) leading from the steam drum (6) to the pre-superheater (2), a shut-off member (16) is arranged between the lines (17, 18) branching off to the respective steam barriers (15a, 15d).

5. Steam generator according to Claim 1, characterized in that the bottom collectors (12a, 12b, 12c) of the vertically arranged tube banks are connected to the down pipe (8) of the steam drum (6) via feed lines (19a, 19b, 19c) and a line (21) which can be shut off (20).

6. Steam generator according to Claims 2 and 5, characterized in that the steam barriers (15a, 15d) and the feed lines (19a, 19b, 19c) are provided with drain valves (22a, 22d, 23).

## Revendications

1. Générateur de vapeur avec une partie par convection disposée après la chambre de foyer, se composant essentiellement d'un surchauffeur final (1), d'un surchauffeur initial (2), d'un évaporateur (3) et d'un économiseur (4) disposés l'un à la suite de l'autre du côté des gaz de fumées, dans lequel un autre échangeur de chaleur par contact (5) avec plusieurs registres de tubes (10) est disposé avant le surchauffeur final (1) du côté des gaz de fumées, caractérisé en ce que l'échangeur de chaleur par contact (5) est raccordé au tambour à vapeur (6) d'une façon telle qu'il puisse fonctionner aussi bien en évaporateur qu'en surchauffeur, les registres de tubes (10) de l'échangeur de chaleur par contact, disposés généralement en position verticale ou inclinée, étant parcourus en parallèle de bas en haut par le fluide de travail à réchauffer dans le montage en évaporateur et étant parcourus en série dans le montage en surchauffeur.

2. Générateur de vapeur suivant la revendication 1, caractérisé en ce que, dans la marche en série, le collecteur d'entrée et le collecteur de sortie (11a, 11d) des registres de tubes (10) sont raccordés aussi bien au tambour à vapeur (6) par un tube de débordement respectif (14a, 14d) pouvant être obturé, qu'à la conduite de vapeur (7) menant du tambour à vapeur vers le surchauffeur initial (2), via un barrage de vapeur respectif (15a, 15d).

3. Générateur de vapeur suivant la revendication 2, caractérisé en ce que le barrage de vapeur (15a, 15d) est un siphon.

4. Générateur de vapeur suivant la revendication 2, caractérisé en ce qu'un organe de fermeture (16) est disposé dans la conduite de vapeur (7) menant du tambour à vapeur (6) au surchauffeur initial (2), entre les conduites (17, 18) dérivées vers les barrages de vapeur respectifs (15a, 15d).

5. Générateur de vapeur suivant la revendication 1, caractérisé en ce que les collecteurs inférieurs (12a, 12b, 12c) des registres de tubes disposés à la verticale sont raccordés au tuyau de descente (8) du tambour à vapeur (6), par des conduites d'arrivée (19a, 19b, 19c) et une conduite (21) pouvant être fermée (20).

6. Générateur de vapeur suivant les revendications 2 et 5, caractérisé en ce que les barrages de vapeur (15a, 15d) et les conduites d'arrivée (19a, 19b, 19c) sont pourvues de soupapes de vidange (22a, 22d, 23).
